# EUROPEAN PATENT APPLICATION

(11) **EP 2 688 097 A1**
(43) Date of publication of application: **22.01.2014**
(21) Application number: 11861219.1
(22) Date of filing: 17.03.2011
(51) Int. Cl.: H01L 23/473, F21V 29/00, H01L 23/46, H01L 23/36, F21Y 101/02

(54) **LIQUID-COOLED LED ILLUMINATING LAMP**

(71) Applicant: Beijing Ugetlight Co., Ltd, Haidian District Beijing 100076 (CN)
(72) Inventor: CHEN, Xiran, 065000 Langfang Hebei Province (CN); DUAN, Zhiyong, 065000 Langfang Hebei Province (CN)
(74) Representative: Decamps, Alain René François
(86) International application number: PCT/CN2011/071891
(87) International publication number: WO 2012/122712

(57) **Abstract**

A liquid-cooled LED illuminating lamp includes a lamp head (1), a lamp core (2) and an illuminating lamp shell (3). The illuminating lamp shell (3) covers the periphery of the lamp core (2) and the cavity of the illuminating lamp shell (3) is filled with silicone oil (4) for radiating heat. One end of the lamp core (2) is immersed in the silicone oil (4) for radiating heat, and the illuminating lamp shell (3) is connected hermetically with the lamp head (1) at the other end of the lamp core (2). The liquid-cooled LED illuminating lamp has a simple construction and good heat dispersing performance.

## Description

### Technical Field

The present invention relates to the field of LED lighting, particularly relates to a liquid-cooled LED illuminating lamp.

### BACKGROUND ART

In the background of the current global energy shortage concerns rise again, energy conservation is an important issue facing our future. LED, called the fourth-generation lighting source or green lighting source, with the characteristics of energy saving, environmental protection, long life, small size and etc., can be widely applied in various fields of directing, display, decorating, backlight source, general lighting and urban night-landscaping and etc. In the lighting field, LED light-emitting products are attracting the world's attention, as a new type of green lighting source products, LED must be the future trend of development, and the twenty-first century will enter a new era of lighting source typically represented by LED.

LED light-emitting chip emits light by electron recombination and, in the case of small current, it produces a little heat, but in the high-power LED illuminating lamp, especially in the field of lighting applications, it is required a larger amount of current, so as to generate a lot of heat and to rise the operating temperatures. The main factor affecting the LED light-emitting chip is the temperature (the operating temperature of PN node), the operating temperature of PN node is generally no higher than 120 degrees, preferably at about 100 degrees, the temperature of PN node rise 10 degrees each, the luminous flux will decay 1%, the main light-emitting wavelength drift 1 nm, and the life will reduced as followed. Therefore, heat dispersing of the LED is a problem that must be considered.

In addition, the volume of LED light-emitting chip is very small, and it is the point light-emitting, with high directivity (the light of LED light-emitting chip emitted is linear, the divergence is not good), it directly leads to the irradiation angle is relatively small, and light quickly weakened deviated from the angle, so as to unable to adapt to the needs of the large area lighting. In the prior art, in order to solve the problems of the irradiation angle is relatively small, the lamp tube-type LED lighting is used, and the fixture arraying too dense, high design costs and poor cooling effect, and the energy saving effect is lost.

### SUMMARY OF THE INVENTION

The aim of the present invention is to provide a liquid-cooled LED illuminating lamp, which having the characteristics of good heat dissipation performance and simple structure.

To achieve the purpose of the present invention to provide the liquid-cooled LED illuminating light, characterized in that: includes a lamp head, a lamp core, and an illuminating lamp shell; the said illuminating shell covers the periphery of the lamp core and the cavity of the illuminating lamp shell is filled with silicone oil for radiating heat, and one end of the said lamp core is immersed in the silicone oil for radiating heat; at the other end of the said lamp core, the said illuminating lamp shell is connected hermetically with the lamp head.

The said purpose also can be further improved by the following technical solutions.

The viscosity coefficient of the said silicone oil is 5 -800 X 10² Pa·s.

The viscosity coefficient of the said silicone oil is 5 -5000 X 10⁻² Pa·s.

The said silicone oil includes methyl silicone oil, ethyl silicone oil, phenyl silicone oil, methyl hydrogen-containing silicone oil, methly-phenyl silicone oil, methyl chlorophenyl silicone oil, methyl ethoxyl silicone oil, methyl trifluoropropyl silicone oil, methyl vinyl silicone oil, methyl hydroxy silicone oil, ethyl hydrogen-containing silicone oil, hydroxyl hydrogen-containing silicone oil and cyanide-containing silicone oil.

The beneficial effects of the present invention are: the liquid-cooled LED illuminating lamp of the present invention, with:
1. simple structure , easy to manufacture;
2. good thermal performance, energy-saving features.

### BRIEF DESCRIPTION OF THE DRAWINGS

Figure 1 is a schematic structural diagram of the example 1 of the liquid-cooled LED illuminating lamp of the present invention;
Figure 2 is a schematic structural diagram of the lamp core of the example 1 of the liquid-cooled LED illuminating lamp of the present invention;
Figure 3 is a cross-sectional view of the example 2 of the liquid-cooled LED illuminating lamp of the present invention;
Figure 4 is a schematic structural diagram of the large angle LED light source of the example 2 of the liquid-cooled LED illuminating lamp of the present invention;
Figure 5 is a schematic structural diagram of the conductive frame of the example 2 of the liquid-cooled LED illuminating lamp of the present invention;
Figure 6 is a cross-sectional view of the conductive frame of the example 2 of the liquid-cooled LED illuminating lamp of the present invention;
Figure 7 is an assembly diagram of LED illuminating chips of the large-angle LED light source of the example 2 of the liquid-cooled LED illuminating lamp of the present invention;
Figure 8 is an assembly top view of LED illuminating chips of the large-angle LED light source of the example 2 of the liquid-cooled LED illuminating lamp of the present invention;
Figure 9-12 are assembly diagrams of the lamp core of the example 2 of the liquid-cooled LED illuminating lamp of the present invention;
Figure 13-17 are assembly diagrams of the example 2 of the liquid-cooled LED illuminating lamp of the present invention.
Therein,
1 lamp head:
2 lamp core:
21 multi-row lamppost, 22 connecting piece;
6 large-angle LED light source:
   61 conductive frame:
      611 positive electrode support body: 6111 support pillar, 6112 straight prism-shaped head portion;
      612 negative electrode support base: 6121 straight prism-shaped mounting post: 61221 lens mounting groove;
      6122 positioning rod, 6123 threaded pillar, 6124 cylindrical hollow passage; 62 lens,
   63 bonding wire; 7 metal tube; 8 lamp core pillar;
3 illuminating lamp shell; 4 silicone oil; 5 driving power accommodating body

### THE DETAILED EMBODIMENTS

To enable the objectives, technical solutions and advantages of the present invention more apparent, hereinafter in conjunction with the accompanying drawings and Examples, the liquid-cooled LED illuminating lamp of the present invention is described in further detail. It should be understood that the specific embodiments described herein are only for explaining the present invention, not intended to limit the present invention.

### Example 1

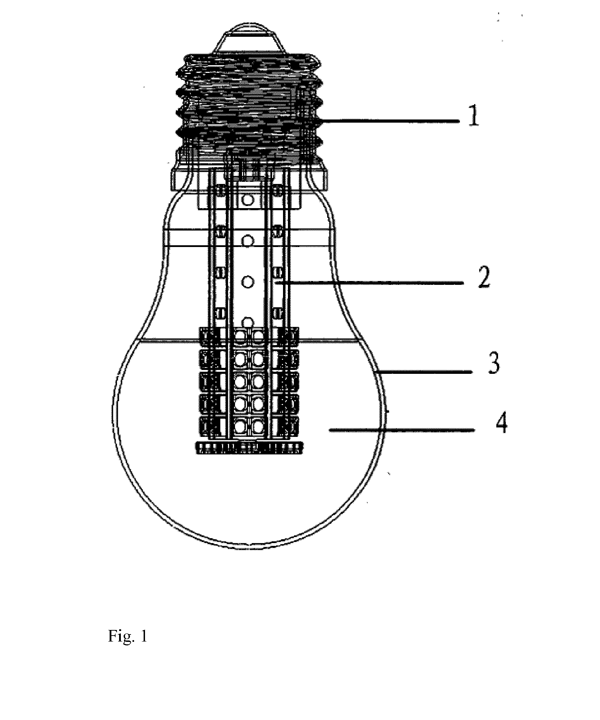

As shown in Figure 1, a liquid-cooled LED illuminating lamp, includes a lamp head 1, a lamp core 2, and an illuminating lamp shell 3; the said illuminating shell 3 covers the periphery of the lamp core 2 and the cavity of the illuminating lamp shell 3 is filled with silicone oil 4 for radiating heat, and one end of the said lamp core 2 is immersed in the silicone oil 4 for radiating heat; at the other end of the said lamp core 3, the said illuminating lamp shell 3 is connected hermetically with the lamp head 1.

Preferably, the viscosity coefficient of the said silicone oil is 5 -800 × 10² Pa·s.

Preferably, the viscosity coefficient of the said silicone oil is 5 -5000 × 10⁻² Pa·s.

Preferably, the said silicone oil includes methyl silicone oil, ethyl silicone oil, phenyl silicone oil, methyl hydrogen-containing silicone oil, methly-phenyl silicone oil, methyl chlorophenyl silicone oil, methyl ethoxyl silicone oil, methyl trifluoropropyl silicone oil, methyl vinyl silicone oil, methyl hydroxy silicone oil, ethyl hydrogen-containing silicone oil, hydroxyl hydrogen-containing silicone oil and cyanide-containing silicone oil.

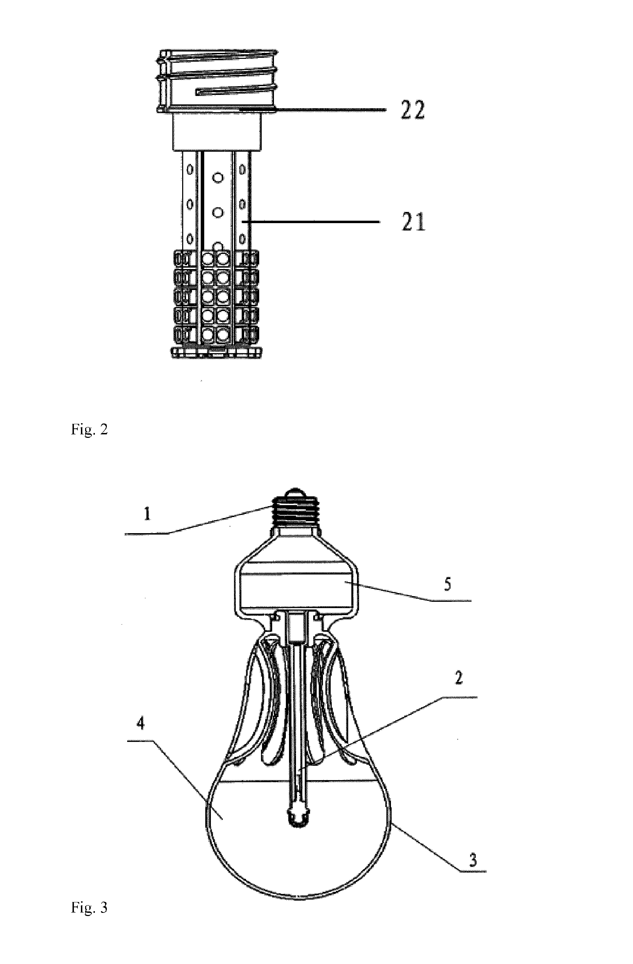

Preferably, shown in Figure 2, the said lamp core 1 includes multi-row lamppost 21 and the connecting piece 22; the said multi-row lamppost 21 is the multi-row lamppost which is surrounded by aluminum-based circuit board; a plurality of LED light-emitting chip arrays at the top surface of one end and each side face of the multi-row lamppost 21; the other end of the multi-row lamppost 21 is connected with the connecting piece 22; the said connecting piece 22 is connected hermetically with the lamp head 1. The Aluminum PCB has excellent thermal conductivity, so the thermal conductivity of the multi-row lamppost is very good. The heat generated by multiple LED light-emitting chips conducts to the multi-row lamppost, as the distances between the silicone oil to the multi-row lampposts are different, leading to different temperatures to form convection current, and the convection current will take away the extra heat of the multi-row lampposts; meantime, the contact area of the illuminating lamp shell and the outside air is very big, it is beneficial to disperse heat.

Preferably, the said multi-row lamppost 21 is the hollow multi-row lamppost, a plurality of holes set on the every side face of the multi-row lamppost. The heat generated by multiple LED light-emitting chips conducts to the multi-row lamppost, resulting in the temperature difference of the silicone oil between the outside and the hollow part of the multi-row lamppost, and the speed of dispersing heat is accelerated by the convection of the silicone oil between the outside and the hollow part of the multi-row lamppost through the multiple holes.

Preferably, the said multi-row lamppost 21 partially or wholly immersed in the said silicone oil 4.

### Example 2

Shown in Figure 3, as an embodiment, the liquid-cooled LED illuminating lamp of the present invention, includes a lamp head 1, a lamp core 2, an illuminating lamp shell 3, silicone oil 4 for radiating heat and driving power accommodating body 5; wherein, the said illuminating lamp shell 3 covers the periphery of the lamp core 2 and the cavity of the illuminating lamp shell 3 is filled with silicone oil 4 for radiating heat; and one end of the said lamp core 2 is immersed in the silicone oil 4 for radiating heat; the other end of the lamp core 2 is connected hermetically with the lamp head 1 by the driving power accommodating body 5; the said illuminating lamp shell 3 is fixedly connected with the driving power accommodating body 5.

Preferably, the viscosity coefficient of the said silicone oil is 5 -800 × 10² Pa·s.

Preferably, the viscosity coefficient of the said silicone oil is 5 -5000 × 10⁻² Pa·s.

Preferably, the said silicone oil includes methyl silicone oil, ethyl silicone oil, phenyl silicone oil, methyl hydrogen-containing silicone oil, methly-phenyl silicone oil, methyl chlorophenyl silicone oil, methyl ethoxyl silicone oil, methyl trifluoropropyl silicone oil, methyl vinyl silicone oil, methyl hydroxy silicone oil, ethyl hydrogen-containing silicone oil, hydroxyl hydrogen-containing silicone oil and cyanide-containing silicone oil.

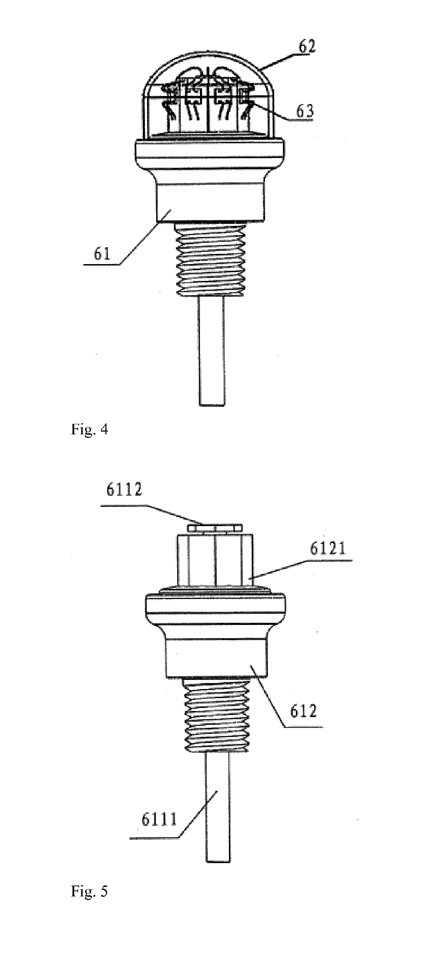

The sail lamp core 2 comprises a large-angle LED light source 6, as shown in figure 4, which comprises a conductive frame 61, lens 62 and LED light emitting chip and the bonding wire 63.

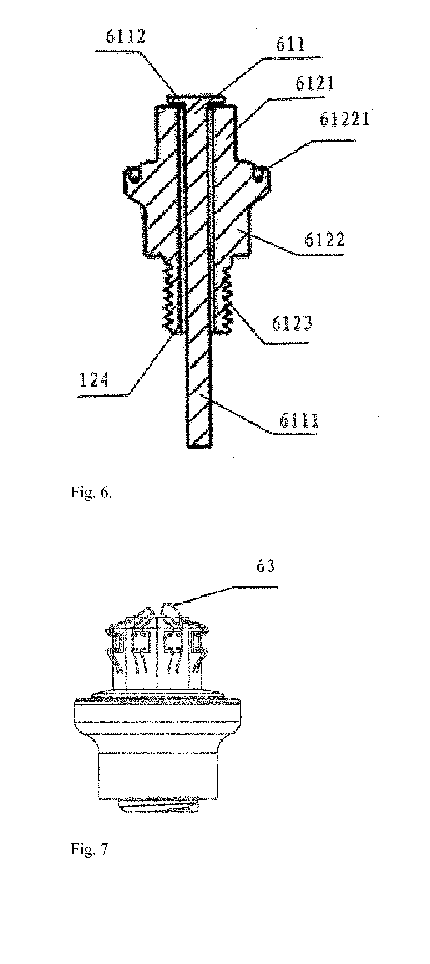

As shown in Figure 5 and Figure 6, the said conductive frame 61 comprises a positive electrode support body 611 and a negative electrode support base 612, it is filled with insulating thermally conductive plastic between the positive electrode support body 611 and the negative electrode support base 612, i.e. the positive electrode support body 611 and the negative electrode support base 612 are electrically conductive respectively, and it is insulating thermally conductive between the positive electrode support body 611 and the negative electrode support base 612. The positive electrode support body 611 is connected to the positive electrode of the circuit, and the negative electrode support base 612 is connected to the negative electrode of the circuit.

Wherein, the positive electrode support body 611 includes a support pillar 6111 and straight prism-shaped head portion 6112 set on the end of the support pillar, wherein, the bottom surface of the straight prism-shaped head portion 6112 is a regular octagon. The radius of the straight prism-shaped head portion 6112 is longer than the radius of the support pillar 6111, the length of the support pillar 6111 is longer than the length of the negative electrode support base 612.

From the top to the bottom of the negative electrode support base 612 are set straight prism-shaped mounting post 6121, the positioning pillar 6122 (its function is described below) and the threaded columns 6123 (and its role in the description below) in turn. Wherein the bottom surface of straight prism of the mounting post 6121 is a regular octagon; the threaded column 6123 has the shortest radius, the radius of straight prism-shaped mounting post 6121 is medium, and the radius of the positioning pillar 6122 is longest. The negative electrode support base 612 has a cylindrical hollow passage 6124, the hollow passage 6124 is longitudinally throughout the center of the negative electrode support base 612, and the radius of the hollow passage 6124 is slightly longer than the radius of the support pillar 6111, and shorter than the radius of the straight prism-shaped head portion 6112. Wherein, the annular lens mounting groove 61221 is set on the upper surface of the positioning pillar 6122, and the lens 62 is fixed within the lens mounting groove 61221.

The said support pillar 6111 of the positive electrode support body 611 passes through the said hollow passage 6124, and the support pillar 6111 protrudes from the lower end of the negative electrode support base 612 by the straight prism-shaped head portion 6112 embedding on the top of the straight prism-shaped mounting post 6121.

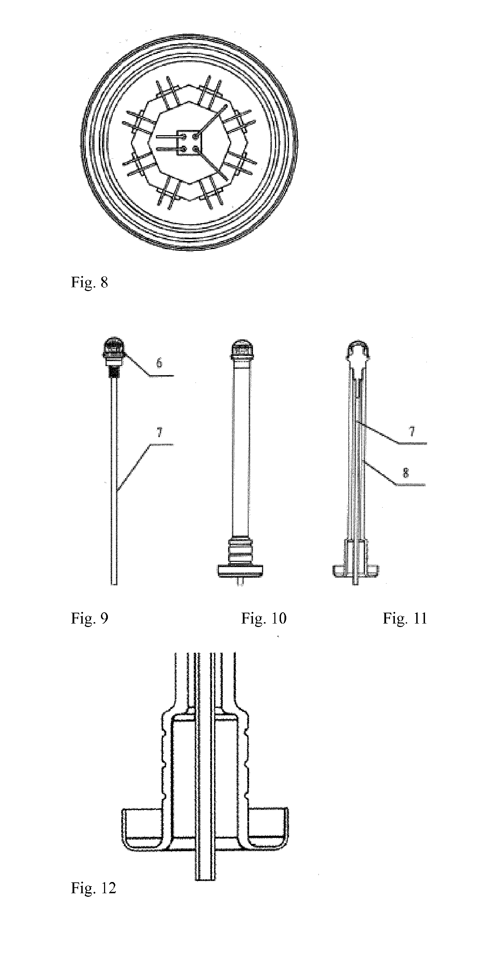

As shown in Figure 7 and Figure 8, the LED light-emitting chip is fixed on the upper surface of the straight prism of the head portion 6112 and each side face of the straight prism-shaped mounting post 6121. The positive (negative) electrode of the LED light-emitting chip is connected to the positive electrode support body 611 (negative electrode support base 612) via bonding wire 63. In the case of fixing the LED light emitting chip and the using of large-angle LED light source, the positioning pillar 6122 provides an area which can be applied tortion to facilitate clamping and installation.

The large-angle LED light source of the present embodiment packages the spherical light emitting LED light source with the irradiation angle of greater than 270 degrees, its luminous effect approximates with conventional incandescent bulbs, and can replace the traditional incandescent lamps; but 90% energy saving than conventional incandescent lamps. Existing LED light source including the LED light source in which the light emitting chip is located in the polygonal surface, since only the light emitting chip of the side surface, forming a butterfly-shaped light spot. The large-angle LED light source of the present embodiment has the LED light-emitting chips located on the upper surface of the straight prism of the head portion 6112 and the LED light-emitting chips located on polygonal surface, so that its spherical light-emitting.

As a preferred embodiment, the sealant is added within the lens mounting groove 61221, and with the way of technical pressing to set the lens, so as to achieve the high tightness of the large-angle LED light source, greatly improving the sealing effect.

As a preferred embodiment, the blue-light chips are used as LED light-emitting chip, and the fluorescent powder for exciting white light is added into the lens 62, the proportion of the fluorescent powder is no more than 10%. When the blue light passes through the lens, white light is excited. Adding the fluorescent powder into the lens 62 in order to excite white light induces the step of spotting the fluorescent glue to the blue-light LED light-emitting LED chips, so as to improve significantly the production efficiency and reduce defective percentage, makes color coordinates error of batch very small, and avoids the light failure due to the fluorescent powder and the drawback that the blue light of blue LED light-emitting chips can not be effectively excited into white light.

As a preferred embodiment, the said positive electrode support body 611 and the said negative electrode support base 612 are assembled by injection molding with the elements. The inj ection molding with the elements is a kind of plastic injection molding process, which the plastic is injected molding between two or more parts, and it is a processing means of plurality of parts to form a whole body.

As a preferred embodiment, the positive electrode supporting body 611 and the negative electrode support base 612 are processed by copper metal as a raw material, and their surfaces are plated with pure silver or pure gold in order to increase conductivity.

As an embodiment, the straight prism of the straight prism-shaped head portion 6112 is any one of the straight prisms with 3-10 rims.

The said lamp core 2 comprises the said large-angle LED light source 6, further comprises a metal tube 7 and lamp core pillar 8; it is insulated between the said metal tube 7 and the said lamp core pillar 8; the said metal tube 7 is connected with the said positive electrode support body 611, and the said lamp core pillar 8 is connected with the said negative electrode support base 612.

There is thread on the inside wall of one end of the lamp core pillar 8, and there is lamp core groove on the outer side wall of the other end of the lamp core. The metal tube 7 and the supporting pillar 6111 are socketing connected, the lamp core pillar 8 is closely connected with the thread pillar 6123 covered by thermally conductive sealant through the thread, and the heat-conductive sealant is filled between the metal tube 7 and the lamp core pillar 8, i.e. the metal tube 7 is connected with the positive electrode of the circuit, and the lamp core pillar 8 is connected with the negative electrode of the circuit. The end of the lamp core and the mouth of the bottle of the illuminating lamp shell are compressing-sealed, thus silicone oil 4 for radiating heat is sealed in the illuminating lamp shell 3.

The positive (negative) electrode of the lamp core is connected with the positive (negative) electrode of the driving power, and the positive (negative) electrode of the driving power is connected with the positive (negative) electrode of the lamp head 1.

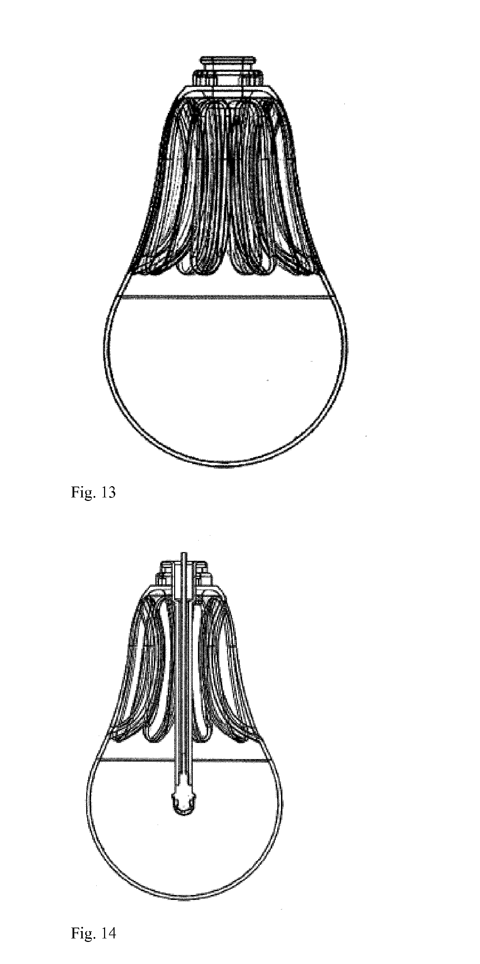

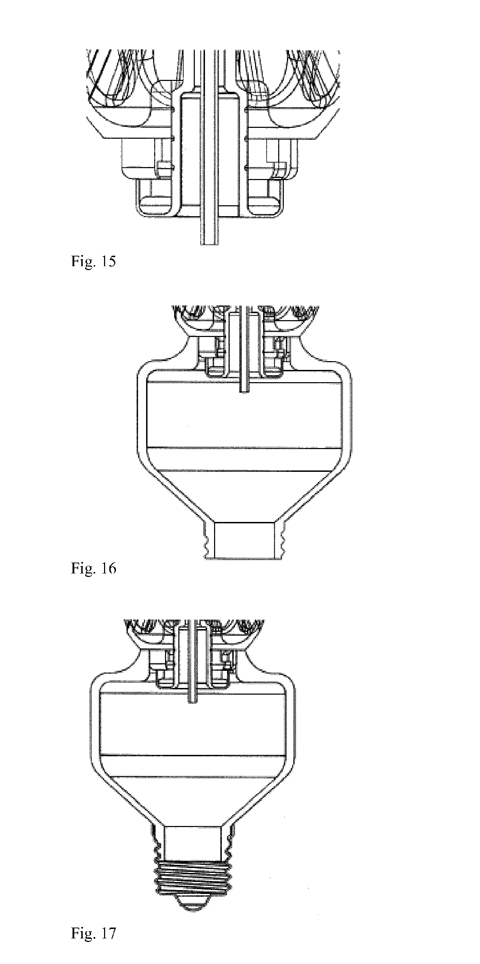

The manufacturing method of the liquid-cooled LED illuminating light as follows:
Step 1: As shown in Figure 9, the metal tube 7 sockets in the outer of the support pillar 6111 by the method of pressure tight diameter; i.e. metal tube 7 and the positive electrode support body 611 forming a positive electrode;
Step 2: As shown in Figures 10 and 11, the lamp core pillar 8 is closely connected with the thread pillar 6123 covered by thermally conductive sealant through the thread, and the heat-conductive sealant is filled between the metal tube 7 and the lamp core pillar 8, i.e. lamp core pillar 8 and the negative electrode support base 612 forming the negative electrode, and it is insulated and thermally conductive between the positive electrode and the negative electrode.
Step 3: As shown in Figure 12, the sealant is used to cover the bottom of the groove of the lamp core 2;
   So far, the assembling of lamp core 2 is completed;
Step 4 As shown in Figure 13, a certain amount of high thermal conductivity of silicone oil is filled in the illuminating lamp shell 3 through the mouth of the bottle;
Step 5: As shown in Figures 14 and 15, the lamp core 2 is placed into the illuminating lamp shell 3, the lamp core groove and the mouth of the bottle of the illuminating shell 3 are compressing sealed by sealer, so the silicone oil for irradiating heat is sealed in the illuminating shell 3; at this time, the large-angle LED light source completely immersed within the high thermal conductivity of silicone oil, since the lens 62 are assembled with the way of technical pressing, so there is no silicone oil in the large-angle LED light source;
   So far, the assembling of lamp core 2 and the illuminating lamp shell 3 are completed;
Step 6: As shown in Figure 16, the driving power accommodating body 5 is connected with the illuminating lamp shell 3 with the way of bayonet, and the positive(negative) electrode of the lamp core 2 is connected with the positive(negative) electrode of the driving power;
Step 7: As shown in Figure 16, the driving power accommodating body 5 is connected with the lamp head 1, and the positive(negative) electrode of the driving power accommodating body 5 is connected with the positive(negative) electrode of the lamp head 1.

The assembling of the liquid-cooled LED illuminating light is completed.

The heat generated by the LED light-emitting chips included in the liquid-cooled LED illuminating lamp is dispersed by the following ways:
For the LED light-emitting chips on the each side of the straight-prism installation pillar, the heat generated is passed to positioning pillar through the straight-prism installation pillar, and then passed to silicone oil for irradiating heat through the positioning pillar, so as to achieve heat dispersing. For the LED light-emitting chips on the upper surface of the straight prism-shaped head position, the part of the heat generated is dispersed by the positive electrode support body and the long metal tube; and part of the heat is passed to positioning pillar through the straight-prism installation pillar, and then passed to silicone oil for irradiating heat through the positioning pillar, so as to achieve heat dispersing.

The liquid-cooled LED illuminating lamp of the present invention has the features of simple structure, easy to manufacture; big illuminating angle, good heat-dispersing performance, and energy-saving.

Finally, it should be noted that, the skilled in the art can make various modifications and variations of the present invention without departing from the spirit and scope of the present invention. Thus, if these modifications and variations of the present invention belong to the claims of the present invention and within the scope of the technical equivalents, the present invention is also intended to encompass these changes and variations.

## Claims

1. A liquid-cooled LED illuminating lamp, **characterized in that**:
includes a lamp head (1), a lamp core (2), and an illuminating lamp shell (3); the said illuminating shell (3) covers the periphery of the lamp core (2) and the cavity of the illuminating lamp shell (3) is filled with silicone oil (4) for radiating heat, and one end of the said lamp core (2) is immersed in the silicone oil (4) for radiating heat; at the other end of the said lamp core (2),the said illuminating lamp shell (3) is connected hermetically with the lamp head (1).

2. The liquid-cooled LED illuminating lamp of claim 1, wherein the viscosity coefficient of the said silicone oil is 5 -800 × 10² Pa·s.

3. The liquid-cooled LED illuminating lamp of claim 1, wherein the viscosity coefficient of the said silicone oil is 5 -5000 × 10⁻² Pa·s.

4. The liquid-cooled LED illuminating lamp of claim 1, wherein the said silicone oil includes methyl silicone oil, ethyl silicone oil, phenyl silicone oil, methyl hydrogen-containing silicone oil, methly-phenyl silicone oil, methyl chlorophenyl silicone oil, methyl ethoxyl silicone oil, methyl trifluoropropyl silicone oil, methyl vinyl silicone oil, methyl hydroxy silicone oil, ethyl hydrogen-containing silicone oil, hydroxyl hydrogen-containing silicone oil and cyanide-containing silicone oil.

5. The liquid-cooled LED illuminating lamp of claim 1, wherein the said lamp core (2) includes multi-row lamppost (21) and the connecting piece (22); the said multi-row lamppost (21) is the multi-row lamppost which is surrounded by aluminum-based circuit board; a plurality of LED light-emitting chip arrays at the top surface of one end and each side face of the multi-row lamppost (21); the other end of the multi-row lamppost (21) is connected with the connecting piece (22); the said connecting piece (22) is connected hermetically with the lamp head (1).

6. The liquid-cooled LED illuminating lamp of claim 5, wherein the said multi-row lamppost (21) is the hollow multi-row lamppost, a plurality of holes on the every side face of the multi-row lamppost.

7. The liquid-cooled LED illuminating lamp of claim 5, wherein the said multi-row lamppost (21) partially or wholly immersed in the said silicone oil (4).

8. The liquid-cooled LED illuminating lamp of claim 1, 2, 3 or 4, wherein the sail lamp core (2) comprises a large-angle LED light source (6); the said large-angle LED light source (6) comprises a conductive frame (61), a plurality of LED light emitting chip and the bonding wires (63), wherein the LED light emitting chip is connected with the conductive frame (61) by the bonding wires (63);
the said conductive frame (61) comprises a positive electrode support body(611) and a negative electrode support base (612), it is insulated between the said positive electrode support body(611) and the said negative electrode support base (612);
the said positive electrode support body (611) comprises a straight prism-shaped head portion (6112), the said LED light-emitting chip is fixed on the upper surface of the said straight prism-shaped head portion (6112);
the said negative electrode support base (612) comprises a straight prism-shaped mounting post (6121), the said LED light-emitting chip is fixed on every side face of the said straight prism-shaped mounting post (6121).

9. The liquid-cooled LED illuminating lamp of claim 8, wherein the said large-angle LED light source (6) further includes len (62), the said negative electrode support base (612) comprises a positioning pillar (6122), a lens mounting groove (61221) is set on the upper surface of the said positioning pillar (6122), the said len (62) are fixed on the said lens mounting groove (61221) by the way of mechanical pressing.

10. The liquid-cooled LED illuminating lamp of claim 8, wherein further comprises a driving power accommodating body (5); one end of the said lamp core (2) is connected with the lamp head (1) through the said driving power accommodating body (5).

11. The liquid-cooled LED illuminating lamp of claim 8, wherein the said lamp core (2) further comprises a metal tube (7) and lamp core pillar (8); it is insulated between the said metal tube (7) and the said lamp core pillar (8); the said metal tube (7) is connected with the said positive electrode support body (611), and the said lamp core pillar (8) is connected with the said negative electrode support base (612).

12. The liquid-cooled LED illuminating lamp of claim 8, wherein the said positive electrode support body (611) and the said negative electrode support base (612) are assembled by the way of injection molding with the elements to make insulated.

13. The liquid-cooled LED illuminating lamp of claim 8, wherein the straight prism of the said straight prism-shaped mounting post (6121) is any one of the straight prisms with 3-10 rims.

14. The liquid-cooled LED illuminating lamp of claim 8, wherein the said positive electrode support body (611) further comprises a support pillar (6111); the said negative electrode support base (612) has a hollow passage (6124); the said support pillar (6111) passes through the said hollow passage (6124), and the said support pillar (6111) protrudes from the lower end of the said negative electrode support base (612) by the said straight prism-shaped head portion (6112) embedding on the top of the said straight prism-shaped mounting post (6121).

15. The liquid-cooled LED illuminating lamp of claim 9, wherein the lens (62) are the lens of adding 10% at most the fluorescent powder for exciting white light.
